# EUROPÄISCHE PATENTSCHRIFT

(11) **EP 1 984 195 B1**
(45) Veröffentlichungstag und Bekanntmachung des Hinweises auf die Patenterteilung: **15.07.2009**
(21) Anmeldenummer: 07703304.1
(22) Anmeldetag: 06.02.2007
(51) Int. Cl.: B60H 1/00, F28D 20/02, F28D 1/053

(54) **WÄRMEÜBERTRÄGER MIT KÄLTESPEICHER**
HEAT EXCHANGER WITH COLD RESERVOIR
ÉCHANGEUR THERMIQUE COMPRENANT UN ACCUMULATEUR DE FROID

(30) Priorität: 10.02.2006 DE 102006006444
(43) Veröffentlichungstag der Anmeldung: 29.10.2008
(73) Patentinhaber: Behr GmbH & Co. KG, 70469 Stuttgart (DE)
(72) Erfinder: KERLER, Boris, 70176 Stuttgart (DE); KOHL, Michael, 74321 Bietigheim (DE); MANSKI, Ralf, 70197 Stuttgart (DE); STRAUSS, Thomas, 73274 Notzingen (DE); WALTER, Christoph, 70469 Stuttgart (DE)
(86) Internationale Anmeldenummer: PCT/EP2007/000996
(87) Internationale Veröffentlichungsnummer: WO 2007/090606

(56) Entgegenhaltungen:
- EP-A- 1 424 531
- FR-A1- 2 861 166
- US-A1- 2003 041 610
- US-A1- 2004 093 889

## Beschreibung

Die Erfindung betrifft einen Wärmeübertrager, insbesondere für eine Kraftfahrzeug-Klimaanlage, mit Kältespeicher gemäß dem Oberbegriff des Anspruches 1. US 2003/041 610 A1 offenbart einen solchen Wärmeübertrager.

Es ist ein Ziel der Kraftfahrzeughersteller, den Kraftstoffverbrauch des Fahrzeugs zu reduzieren. Eine Maßnahme zur Reduzierung des Kraftstoffverbrauchs ist das Abschalten des Motors bei vorübergehendem Stillstand, beispielsweise beim Halten an einer Ampel. Dieses vorübergehende Abschalten des Motors wird auch Idle-stop-Betrieb genannt. Diese Maßnahme wird bei heutigen verbrauchsarmen Fahrzeugen, wie beispielsweise bei dem sogenannten Dreiliter-Fahrzeug, bereits eingesetzt. Bei Fahrzeugen, die über den Idle-stop-Betriebsmodus verfügen, ist im innerstädtischen Verkehr ca. 25-30 % der Fahrzeit der Motor ausgeschaltet.

Dies ist ein Grund, warum derartige Fahrzeuge oftmals nicht mit einer Klimaanlage ausgerüstet sind, denn bei Motorstillstand kann auch ein für eine Klimaanlage notwendiger Kompressor nicht angetrieben werden, so dass im Idle-stop-Betrieb eine Klimaanlage die notwendige Kälteleistung nicht bereitstellen kann. Zum Teil wird das Problem auch dadurch gelöst, dass bei eingeschalteter Klimaanlage der Motor bei einem Stopp weiterläuft, wodurch jedoch ein höherer Kraftstoffverbrauch resultiert.

In der DE 101 56 944 A1 ist eine Klimaanlage für ein Kraftfahrzeug mit in einem Kältemittelkreis angeordnetem Kompressor und Verdampfer zum Abkühlen von zu konditionierender Luft für den Innenraum offenbart, welche einen zweiten Verdampfer zum Abkühlen der Luft aufweist, der zusätzlich ein Kältespeichermedium enthält, wobei die zu konditionierende Luft wahlweise durch jeden Verdampfer einzeln oder durch beide Verdampfer gemeinsam leitbar ist. Gemäß einer alternativen Ausführungsform ist an Stelle des zweiten Verdampfers der Verdampfer derart ausgebildet, dass er zwei Teilbereiche aufweist, und in einem der beiden Teilbereiche ein Kältespeichermedium enthält, wobei die zu konditionierende Luft wahlweise durch jeden Verdampfer einzeln oder durch beide Verdampfer gemeinsam leitbar ist. Dabei können die Rohre, in welchen das Kältemittel durch den Verdampfer strömt, als Mehrkanalrohre ausgebildet sein, wobei einer oder mehrere der Kanäle mit dem Kältespeichermedium gefüllt sind.

Ausgehend von diesem Stand der Technik ist es Aufgabe der Erfindung, einen verbesserten Wärmeübertrager zur Verfügung zu stellen. Diese Aufgabe wird gelöst durch einen Wärmeübertrager mit den Merkmalen des Anspruchs 1. Vorteilhafte Ausgestaltungen sind Gegenstand der Unteransprüche.

Erfindungsgemäß ist ein Wärmeübertrager, insbesondere ein Verdampfer für eine Kraftfahrzeug-Klimaanlage zum Abkühlen von zu konditionierender Luft für den Innenraum vorgesehen, mit einer Mehrzahl nebeneinanderliegend angeordneter, kältemittelführender Rohre und mit wenigstens einem Kältespeicher, in welchem ein Kältespeichermedium vorgesehen ist. Hierbei weist der Verdampfer zwei parallel zueinander angeordnete und über die gesamte Breite verlaufende Bereiche auf, wobei der erste Bereich in seinem Aufbau einem herkömmlichen Verdampfer entspricht, der Kältespeicher in einen eigenständigen zweiten Bereich angeordnet ist, der von zumindest einem Teil des Kältemittelstroms durchströmbar ist, welcher auch zumindest ein Teil des ersten Bereichs durchströmt, und der erste und der zweite Bereich durch mindestens eine Überströmöffnung miteinander verbunden sind. Über die Überströmöffnung strömt zumindest ein Teilstrom von Kältemittel von einem Bereich in den anderen Bereich über, d.h. in beiden Bereichen strömt Kältemittel. Zwischen den Rohren des ersten und/oder des zweiten Bereichs des Wärmeübertragers können Wellrippen oder andere die Wärmeübertragungsfläche vergrößernde Elemente angeordnet sein. Dadurch, dass der erste Bereich im Wesentlichen dem eines herkömmlichen Wärmeübertragers entspricht, können vorhandene Werkzeuge weiter verwendet werden, lediglich die Werkzeuge für den zweiten Bereich und zur Herstellung der Überströmöffnung(en) muss neu besorgt werden. Der zweite Bereich ist - bei entsprechend der bisherigen Bauweise ausgestaltetem ersten Bereich - relativ einfach an den vorhandenen Bauraum und den Kühlbedarf anpassbar. Ferner ist nur ein Expansionsorgan erforderlich.

Auf Grund des modularen Aufbaus kann man einen derartig ausgebildeten Verdampfer auch als "Add-on"-Speicherverdampfer bezeichnen, d.h. der im Prinzip im Wesentlichen herkömmlichen Basisform des Verdampfers wird ein entsprechend ausgebildetes Kühlmodul zugefügt.

Bevorzugt sind genau zwei Überströmöffnungen vorgesehen, jedoch kann - bei einer getrennten Kältemittelzuführung - auch nur eine Überströmöffnung vorgesehen sein. Ebenso sind eine Mehrzahl von Überströmöffnungen möglich, durch die Kältemittel vom ersten Bereich zum zweiten Bereich und umgekehrt überströmen kann.

In mindestens einem Kältespeicherelement ist bevorzugt mindestens ein kältemittelführendes Rohr angeordnet. Dabei können die Kältespeicherelemente miteinander verbunden sein, insbesondere über mindestens einen Sammelbehälter.

Bei einer Anordnung des kältemittelführenden Rohres im Kältespeicherelement kann es in das mit dem Kältespeichermedium befüllte Kältespeicherelement eingesteckt sein oder aber direkt hierin ausgebildet sein, wobei das Kälte speichermedium bevorzugt das Kältemittel von allen Seiten umgibt, wobei insbesondere eine Rohr-in-Rohr-Anordnung vorgesehen ist.

Ebenfalls kann das Kältespeicherelement durch ein Rohr mit U-förmigem Querschnitt gebildet sein, insbesondere mit mehreren Kammern. Hierbei entsprechen bevorzugt die Innenabmessungen des Kältespeicherelements den Außenabmessungen des kältemittelführenden Rohres im entsprechenden Bereich, so dass die Rohre flächig aneinander anliegen. Auch eine einstückige Ausgestaltung, bspw. gebildet durch ein entsprechend extrudiertes Rohr mit mindestens zwei Kanälen, ist möglich.

Das kältemittelführende und das Kältespeichermedium enthaltende Rohr ist im Falle einer Anordnung vollständig innerhalb des Kältespeicherelements bevorzugt als ein doppelwandiges Flachrohr ausgebildet, wobei sich das Kältemittel im zentralen Bereich und das Kältespeichermedium im äußeren Bereich befindet. Gemäß einer weiteren bevorzugten Ausführungsform weist das doppelwandige Flachrohr Stege auf, die das außen liegende mit dem innen liegenden Flachrohr verbinden. Dadurch, dass der Kältespeicher direkten Luftkontakt hat, ergibt sich eine sehr gute Dynamik beim Wärmeübergang, so dass im Bedarfsfall, d.h. im Idle-stop-Betrieb, die volle Kälteleistung sofort zur Verfügung steht.

Das das Kältespeichermedium enthaltende Rohr kann das kältemittelführende Rohr auch nicht vollständig umgeben. Dabei sind vorzugsweise genau drei Seiten des kältemittelführenden Rohres vom das Kältespeichermedium enthaltenden Rohr umgeben. Das das Kältespeichermedium enthaltende Rohr kann dabei mit einem U-förmigen Querschnitt ausgebildet sein und das kältemittelführende Rohr, wobei es sich vorzugsweise um ein Flachrohr handelt, teilweise, d.h. über einen Teil seines Umfangs, umgeben, wobei bevorzugt der größte Teil des kältemittelführenden Rohres im Inneren des das Kältespeichermedium enthaltenden Rohres angeordnet ist.

Bevorzugt enden die kältemittelführenden Rohre des zweiten Bereichs in einem Sammelbehälter, der getrennt von und lediglich über eine oder mehrere Überströmöffnungen mit einem Sammelbehälter des ersten Bereichs ausgebildet ist. Dies ermöglicht gegebenenfalls auch eine nachträgliche Aufrüstung des Wärmeübertragers mit einem Kältespeicher, insbesondere können aber die ersten Bereiche - abgesehen von den Überströmöffnungen - gleich ausgebildet sein, wie im Falle herkömmlicher Wärmeübertrager, so dass die Herstellungskosten in Folge größerer Stückzahlen und gleicher Werkzeuge für einen Großteil der Bauteile gesenkt werden können. Ferner können die beiden Bereiche getrennt zusammengesetzt und anschließend miteinander verbunden werden.

Die kältespeichermediumführenden Rohre beziehungsweise Kanäle enden vorzugsweise in einem Kältespeichermedium-Sammelbehälter, durch den die kältemittelführenden Rohre beziehungsweise Kanäle ragen, die in einem getrennten Sammelbehälter enden. Dies ermöglicht eine gemeinsame Befüllung der einzelnen Kältespeicherelemente mit dem Kältespeichermedium, so dass eine einfache und schnelle Befüllung der kältespeichermediumführenden Rohre beziehungsweise Kanäle möglich ist. Ferner kann die Montage durch die bevorzugt einstückige Ausgestaltung des Kältespeichers im Falle einer getrennten Ausbildung der kältemittelführenden Rohre und der Kältespeicherelemente vereinfacht werden. Auch kann dadurch ein Ausgleichsraum für insbesondere temperaturbedingte Volumenänderungen des Kältemittels zur Verfügung gestellt werden. Ferner ermöglicht dies eine kompakte Bauweise des zweiten Bereichs.

Bevorzugt weist der erste Bereich eine Anzahl von in unterschiedlicher Richtung vom Kältemittel durchströmbarer Blöcke in Richtung seiner Breite benachbart dem zweiten Bereich auf, und der zweite Bereich mindestens einen Block, insbesondere eine Anzahl von in unterschiedlicher Richtung vom Kältemittel durchströmbarer Blöcke, auf. Dabei unterscheidet sich bevorzugt die Anzahl und/oder Breite der einzelnen Blöcke in Breitenrichtung des Verdampfers im ersten Bereich und im zweiten Bereich. Der erste Bereich weist vorzugsweise direkt benachbart zum zweiten Bereich zwei bis vier, insbesondere drei Blöcke, und der zweite Bereich einen bis sechs Blöcke, insbesondere zwei bis vier Blöcke, auf.

Bevorzugt fluchten Flachrohrreihen des ersten Bereichs und des zweiten Bereichs miteinander, wobei jedoch auch nur hinter jedem n-ten, insbesondere jedem zweiten oder dritten Flachrohr, des ersten Bereichs ein Flachrohr des zweiten Bereichs angeordnet sein kann, so dass der Luftströmungswiderstand möglichst gering ist, jedoch können die Flachrohrreihen auch unregelmäßig oder versetzt (z.B. mittig auf Lücke) angeordnet sein, oder die Kältespeicherelemente mit den hierin angeordneten kältemittelführenden Rohren können gegenüber den anderen Flachrohren des Verdampfers verdreht angeordnet sein. Die Anzahl und Gestalt der Flachrohre des zweiten Bereichs kann entsprechend der gewünschten Wärmemenge im Falle eines Fahrzeugstopps gewählt werden.

Der zweite Bereich des Verdampfers ist bevorzugt in normaler Luftströmungsrichtung gesehen nach dem ersten Bereich des Verdampfers, insbesondere direkt in Anschluss an den Verdampfer, angeordnet, aber es ist ebenfalls eine Anordnung vor dem Verdampfer oder etwas beabstandet vom Verdampfer möglich in einem zweiten, insbesondere kleineren Verdampferteil. Insbesondere im Falle einer beabstandeten Anordnung vom (Haupt)Verdampfer kann die Größe des Sammlers mit Kältespeicher entsprechend dem vorhandenen Bauraum und/oder den Erfordernissen angepasst werden. Besonders vorteilhaft ist, dass der bestehende Verdampfer nicht oder nur unwesentlich abgeändert werden muss, so dass eine relativ einfache Integration des Kältespeichers in bestehende Systeme möglich ist. Vorhandene Werkzeuge müssen nicht (oder nur unwesentlich) abgeändert werden. Lediglich die Werkzeuge für den Kältespeicherbereich des Verdampfers, der angefügt wird, müssen besorgt werden.

Bei den Rohren, welche vom Kältemittel durchströmt werden, handelt es sich vorzugsweise um geschweißte, gefalzte, aus Scheiben tiefgezogene oder extrudierte Flachrohre, die sowohl abgerundet als auch eckig ausgebildet sein können. Jedoch können auch bspw. ovale Rohre oder Rundrohre verwendet werden. Als Materialien kommen insbesondere Aluminium und Aluminiumlegierungen in Frage, jedoch ist auch die Verwendung beliebiger anderer geeigneter, gut wärmeleitender Materialien möglich.

Der Kältespeicher besteht bevorzugt aus Aluminium, insbesondere innen und/oder außen beschichtetem Aluminium (wobei unter Aluminium auch eine Aluminiumlegierung zu verstehen ist), gegebenenfalls auch Kupfer, einer Kupfer-Zink-Legierung, Kunstharz oder Kunststoff. Ein Aluminium-Behälter hat den Vorteil, dass er sich mit den übrigen Teilen des Verdampfers problemlos verlöten lässt. Dabei handelt es sich bevorzugt um ein stranggepresstes Flachrohr, das eine Mehrzahl von Kanälen aufweist, wobei ein Teil der Kanäle das Kältespeichermedium und der andere Teil der Kanäle das Kältemittel enthalten. Die Ausgestaltung kann jedoch auch mehrteilig sein.

Beim Latent- oder Speichermedium handelt es sich bevorzugt um ein PCM-Material (phase change material), das bevorzugt kongruent schmelzende Medien, insbesondere Decanol, Tetra-, Penta- oder Hexadecan, Li-ClO₃3H₂O, wässrige Salzlösungen oder organische Hydrate enthält oder hieraus gebildet ist. Im Speichermedium können auch Keimbildner vorgesehen sein, welche die Kristallbildung beschleunigen.

Die Phasenumwandlungstemperatur des Speichermediums liegt vorzugsweise in einem Bereich von 0°C bis 30°C, bevorzugt von 1°C bis 20°C, insbesondere von 2°C bis 15°C, insbesondere bevorzugt von 4°C bis 12°C.

Im Inneren des Kältespeicherelements können - unabhängig ob es das kältemittelführende Rohr ganz oder nur teilweise umgibt - Einlagen, wie Rippenbleche, vorzugsweise aus Aluminium, jedoch sind auch andere Metalle oder Kunststoffe geeignet, oder andere Turbulenzeinlagen, wie Vliese oder Gestricke, bspw. aus Kunststoff oder Metall, oder Schäume, bspw. Metallschäume oder Kunststoffschäume, vorgesehen sein. Die Einlagen dienen zur Verbesserung des Wärmetransports sowie zur Erhöhung der inneren Oberfläche um die Kristallbildung des Speichermediums zu beschleunigen.

Die Durchströmung der beiden Bereiche erfolgt vorzugsweise seriell, so dass nur ein Expansionsorgan für beide Bereiche vorgesehen ist. Hierbei ist der Kältemitteleintritt bevorzugt am Sammler des ersten Bereichs vorgesehen.

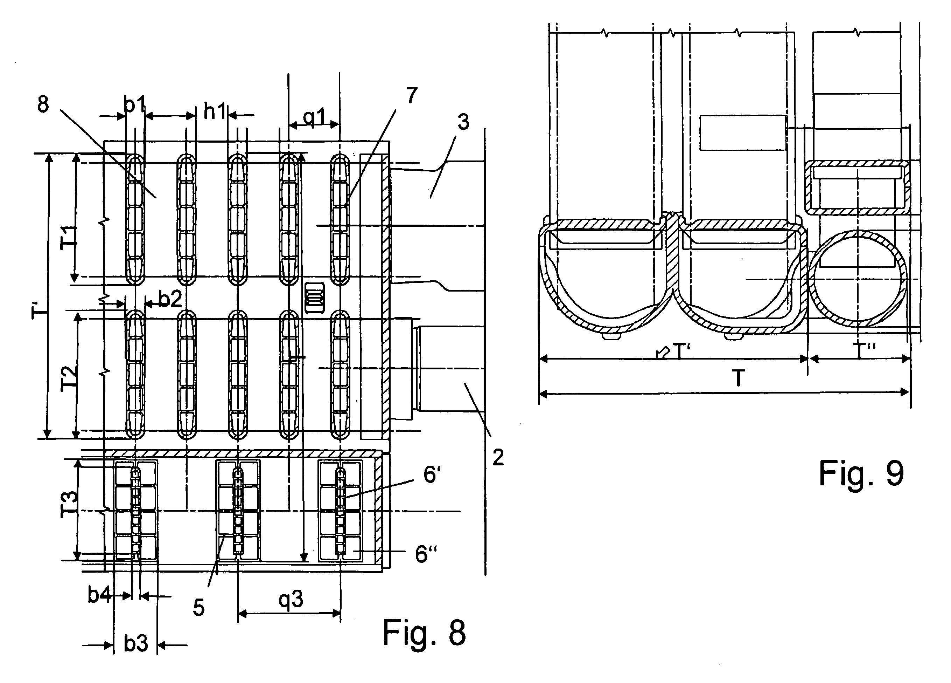

Bevorzugt hat der Wärmeübertrager folgende Abmessungen (bezüglich der Maße wird auf die Figuren 8 und 9 verwiesen):
Die Gesamttiefe T des Wärmeübertragers beträgt bevorzugt 23 bis 200 mm, insbesondere 35 bis 80 mm, besonders bevorzugt 60 +/- 10 mm.

Die Bautiefe T' beträgt bevorzugt 20 bis 150 mm, insbesondere 25 bis 90 mm. Die Bautiefen T1 und T2 der Flachrohre des Verdampfers im Bereich ohne Kältespeicher entsprechen in der Regel einander (symmetrische Ausgestaltung dieses Verdampferbereichs).

Die Breiten b1 und b2 der Flachrohre des Verdampfers im Bereich ohne Kältespeicher entsprechen vorzugsweise einander, wobei bevorzugt je ein Flachrohr der einen Reihe mit einem Flachrohr der anderen Reihe fluchtet. Die Breiten b1 und b2 betragen vorzugsweise 0,8 bis 4 mm, insbesondere 1,3 bis 3,5 mm.

Die Querteilung q1 der ersten Flachrohrreihe beträgt vorzugsweise 4 bis 20 mm, insbesondere bevorzugt 5 bis 13 mm. Sie entspricht bevorzugt der Querteilung der zweiten Flachrohrreihe des Verdampfers.

Die Höhe der Wellrippe der ersten Flachrohrreihe beträgt somit bevorzugt 3 bis 18 mm, insbesondere 4 bis 10 mm. Sie entspricht bevorzugt der Wellrippenhöhe der zweiten Flachrohrreihe des Verdampfers.
Der Verdampfer im Bereich des Kältespeichers weist Flachrohre, welche das Kältespeichermedium in den äußeren Kältespeichermedium-Kanälen enthalten, mit Breiten b3 von vorzugsweise 2,0 bis 10,0 mm, insbesondere von 3,0 bis 8,0 mm, auf. Die Breite b4 der hierin angeordneten Flachrohre, in deren Kältemittel-Kanälen das Kältemittel strömt, beträgt vorzugsweise 0,6 bis 2,5 mm, insbesondere 0,9 bis 1,5 mm.

Die Bautiefe T3 der Flachrohre des Verdampfers im Bereich mit Kältespeicher beträgt vorzugsweise 5 bis 70 mm, insbesondere bevorzugt 10 bis 30 mm.

Die Querteilung q3 der Flachrohre des Verdampfers im Bereich mit Kältespeicher beträgt vorzugsweise ein Vielfaches von q1, um so den Druckabfall der durchströmenden Luft gering zu halten, kann aber auch q1 entsprechen. Besonders bevorzugte Werte sind zwei und drei.

Die Höhe H1 der Kältespeichermedium-Sammelbehälter beträgt bevorzugt 3 bis 25 mm, insbesondere 3 bis 15 mm, ist jedoch vorzugsweise so klein wie möglich, um Bauraum zu sparen und den von Luft durchströmbaren Querschnitt so groß wie möglich zu halten.

Im Folgenden wird die Erfindung anhand eines Ausführungsbeispiels mit Varianten, teilweise unter Bezugnahme auf die Zeichnung, im Einzelnen erläutert. Es zeigen:
- Fig. 1: eine perspektivische Ansicht eines Wärmeüber- tragers mit Sammler gemäß dem ersten Ausführungsbeispiel,
- Fig. 2: eine Seitenansicht des Wärmeübertragers von Fig. 1,
- Fig. 3: eine ausschnittsweise, perspektivische Ansicht des Wärmeübertragers von Fig. 1 mit abgenommenem Sammelkasten und Sammelrohr,
- Fig. 4: eine weitere perspektivische Ansicht eines Bereichs des Wärmeübertragers von Fig. 1 mit seitlich geöff- neten Sammelbehälter und -rohr,
- Fig. 5: eine geschnittene Seitenansicht des Wärmeübertra- gers von Fig. 1,

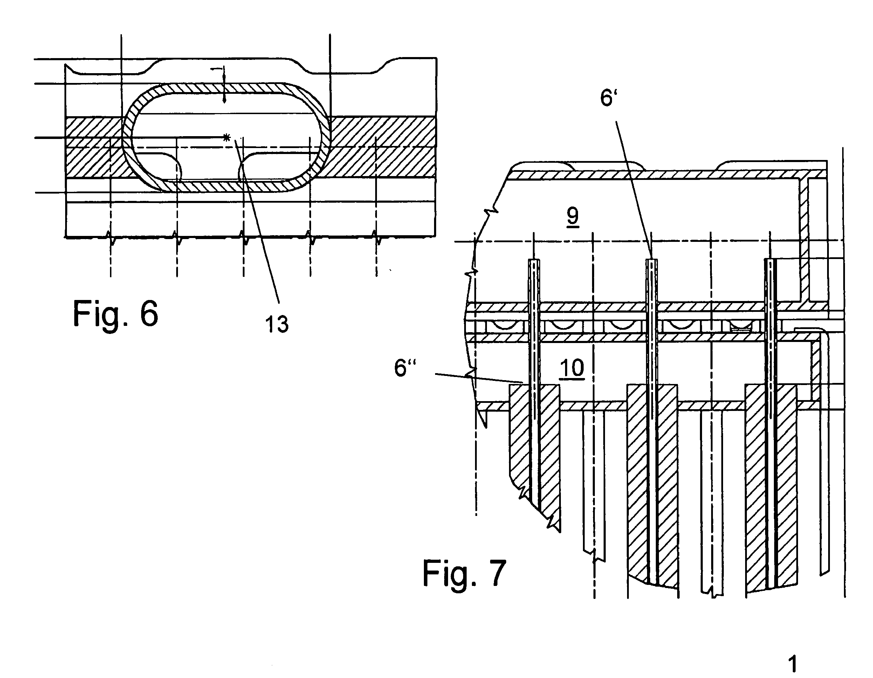

- Fig. 6: eine Detailansicht einer Überströmöffnung,
- Fig. 7: eine geschnittene Detailansicht des Wärmeübertra- gers von Fig. 1 im Bereich des Kältespeichers,
- Fig. 8: einen Schnitt quer durch den Wärmeübertrager von Fig. 1,
- Fig. 9: einen Schnitt durch den unteren Bereich des Wär- meübertragers von Fig. 1,
- Fig. 10: eine perspektivische Ansicht des Wärmeübertragers von Fig. 1 mit schematischer Darstellung des Kälte- mittelströmungsverlaufs,

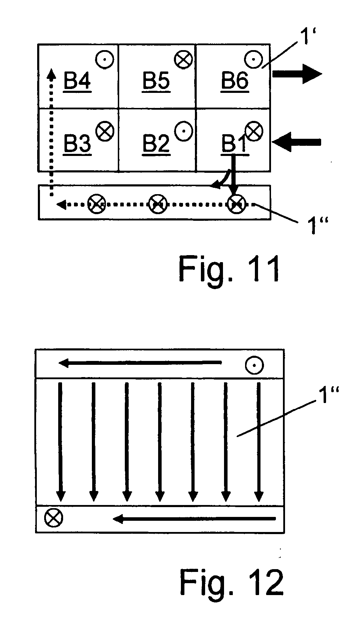

- Fig. 11: eine schematische Schnittdarstellung des Wärmeü- bertragers von Fig. 1 zur Verdeutlichung des Kälte- mittelströmungsverlaufs,
- Fig. 12: eine schematische Seitenansicht des Wärmeüber- tragerbereichs mit dem Kältespeicher von Fig. 1 zur Verdeutlichung des Kältemittelströmungsverlaufs,
- Fig. 13a, b: schematische Darstellungen des Kältemittelströ- mungsverlaufs gemäß einer ersten Variante,
- Fig. 14a, b: schematische Darstellungen des Kältemittelströ- mungsverlaufs gemäß einer zweiten Variante,
- Fig. 15a, b: schematische Darstellungen des Kältemittelströ- mungsverlaufs gemäß einer dritten Variante,
- Fig. 16a, b: schematische Darstellungen des Kältemittelströ- mungsverlaufs gemäß einer vierten Variante,
- Fig. 17a, b: schematische Darstellungen des Kältemittelströ- mungsverlaufs gemäß einer fünften Variante, und
- Fig. 18a, b: schematische Darstellungen des Kältemittelströ- mungsverlaufs gemäß einer sechsten Variante.

Eine Kraftfahrzeug-Klimaanlage zum Temperieren des Kraftfahrzeug-Innenraums mit einem Kältemittel-Kreislauf (vorliegend R134a, jedoch kann bspw. auch CO₂ oder ein anderes Kältemittel verwendet werden) von der nur der Verdampfer 1, mit Einspritzrohr 2 und Saugrohr 3 dargestellt ist, weist, um auch bei einem Motorstopp zumindest über einen kurzen Zeitraum eine ausreichende Kühlleistung zur Verfügung zu stellen, einen Kältespeicher 4 auf, bestehend aus einer Mehrzahl von Kältespeicherelementen 5, vorliegend zweiundzwanzig, welche mit einem Kältespeichermedium gefüllt sind. Die Kältespeicherelemente 5 sind durch Bereiche speziell ausgestalteter Flachrohre 6 aus Aluminium gebildet, auf die an späterer Stelle näher eingegangen wird. Als Kältespeichermedium dient vorliegend Decanol. Alternativ sind beispielsweise auch Tetra-, Penta- oder Hexadecan geeignet.

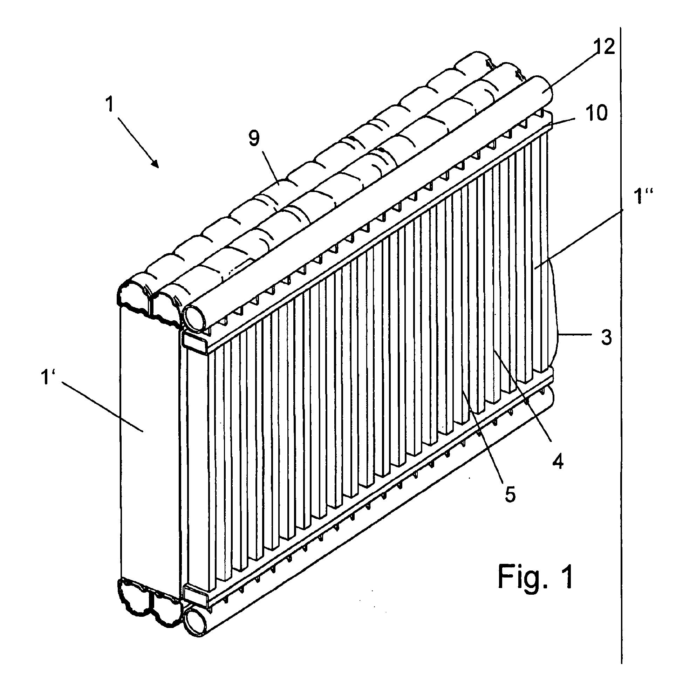

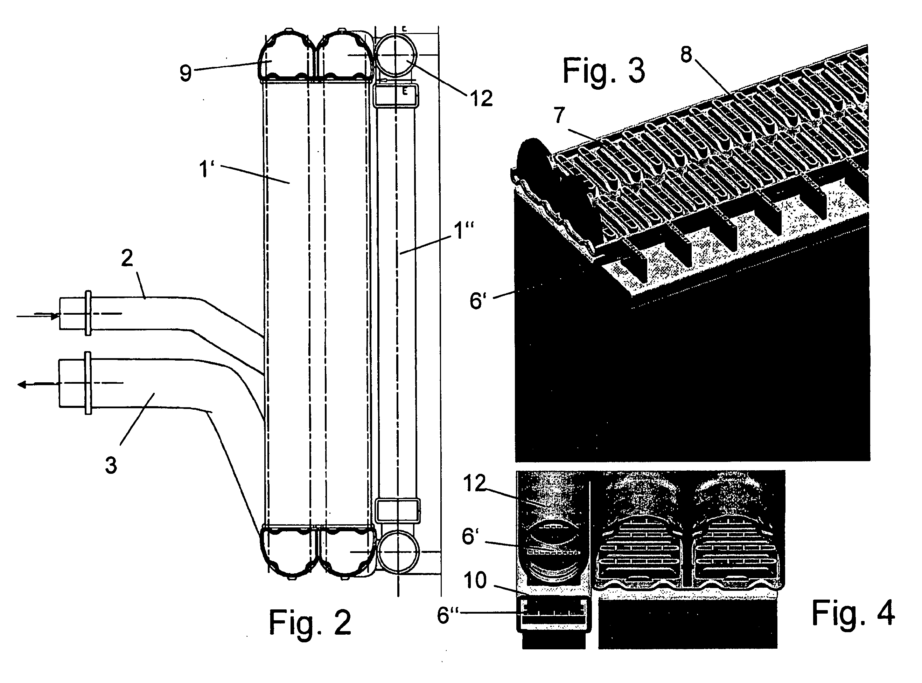

Die normale Luftströmungsrichtung ist in den Figuren 1 und 2 durch Pfeile angedeutet. Der Verdampfer 1 weist im größeren, luftanströmseitigen Teil einen Bereich 1' mit Aufbau auf, der dem eines herkömmlichen Verdampfers entspricht, mit zwei Reihen von Flachrohren 7 und dazwischen angeordneten Wellrippen 8. Die Flachrohre 7 enden jeweils in einem Sammelbehälter 9. Wie aus Figuren 1 und 2 ersichtlich, tritt das Kältemittel an der Schmalseite des oberen Sammelbehälters 9 luftabströmseitig in den Verdampfer 1 ein und verlässt ihn auf der gleichen Schmalseite im luftanströmseitigen Bereich des Sammelbehälters 9.

Der andere Bereich des Verdampfers 1, nämlich der Kältespeicherbereich 1", welcher vom Prinzip her getrennt als eigenständiger Bereich des Verdampfers 1 ausgebildet ist und in welchem die Kältespeicherelemente 5 vorgesehen sind, wird durch den kleineren, luftabströmseitigen Teil des Verdampfers 1 gebildet.

Die Kältespeicher-Flachrohre 6 im Kältespeicherbereich 1" und die herkömmlichen Flachrohre 7 im Bereich 1' sind, wie insbesondere aus Fig. 8 ersichtlich, derart angeordnet, dass jeweils beim ersten, dritten, fünften usw. Flachrohr 7 mit demselben in Luftströmungsrichtung fluchtend ein Kältespeicher-Flachrohr 6 jeweils fluchtend angeordnet ist.

Da die Zwischenräume zwischen den Kältespeicher-Flachrohren 6, die vorliegend in Luftströmungsrichtung schmaler, aber quer hierzu breiter ausgebildet sind, als die Flachrohre 7, auf Grund dieser Anordnung relativ breit sind, ist der Strömungswiderstand für die den Verdampfer 1 durchströmende Luft in Vergleich zum Strömungswiderstand des ersten Bereichs 1' des Verdampfers 1 nahezu vernachlässigbar und kann für die Auslegung des Verdampfers 1 in Hinblick auf die Luftdurchströmung im Wesentlichen vernachlässigt werden, so dass gegenüber einer Basisvariante des Verdampfers ohne den Kältespeicherbereich 1" keine oder nur unwesentliche Neuberechnungen in Hinblick auf die Luftströmung erfolgen müssen. Alternativ können die Flachrohre 6 und 7 auf beliebige andere Weise angeordnet sind, bspw. fluchtend oder auf Lücke.

Die Kältespeicher-Flachrohre 6 weisen einen doppelwandigen Aufbau mit einer Mehrzahl von Kältemittel-Kanälen 6' und Kältespeichermedium-Kanälen 6" auf, wobei die Kältemittel-Kanäle 6' innen angeordnet sind (siehe Fig. 8). Dabei sind die Kältespeicher-Flachrohre 6 derart angeordnet, dass die als Kältespeicherelemente 5 dienenden Kältespeichermedium-Kanäle 6" jeweils in einem von zwei Kältespeichermedium-Sammelbehältern 10 enden, so dass das Kältespeicherelement 5 nur einen einzigen Hohlraum aufweist, welcher - von einem Ausgleichsraum abgesehen - vollständig mit dem Kältespeichermedium gefüllt ist. Das Befüllen erfolgt über eine Öffnung im Kältespeichermedium-Sammelbehälter 10 in einem einzigen Arbeitsgang. Nach dem Befüllen wird die Öffnung fest verschlossen, so dass ein unbefugtes Öffnen sicher verhindert wird.

Im Inneren des durchgehenden Hohlraums sind gemäß einer nicht in der Zeichnung dargestellten Variante Elemente vorgesehen, wie vorliegend ein Kunststoff-Vlies, die zur Verbesserung des Wärmetransports sowie zur Erhöhung der inneren Oberfläche dienen, um die Kristallbildung des Latentmediums zu beschleunigen.

Die Kältemittel-Kanäle 6' ragen mit ihren Enden jeweils durch die entsprechenden Kältespeichermedium-Sammelbehälter 10 hindurch und enden jeweils in einem getrennt vom Sammelbehälter 9 ausgebildeten, vorliegend als Rohr ausgebildeten Sammelbehälter 12, auf die im Folgenden als Sammelrohre Bezug genommen wird.

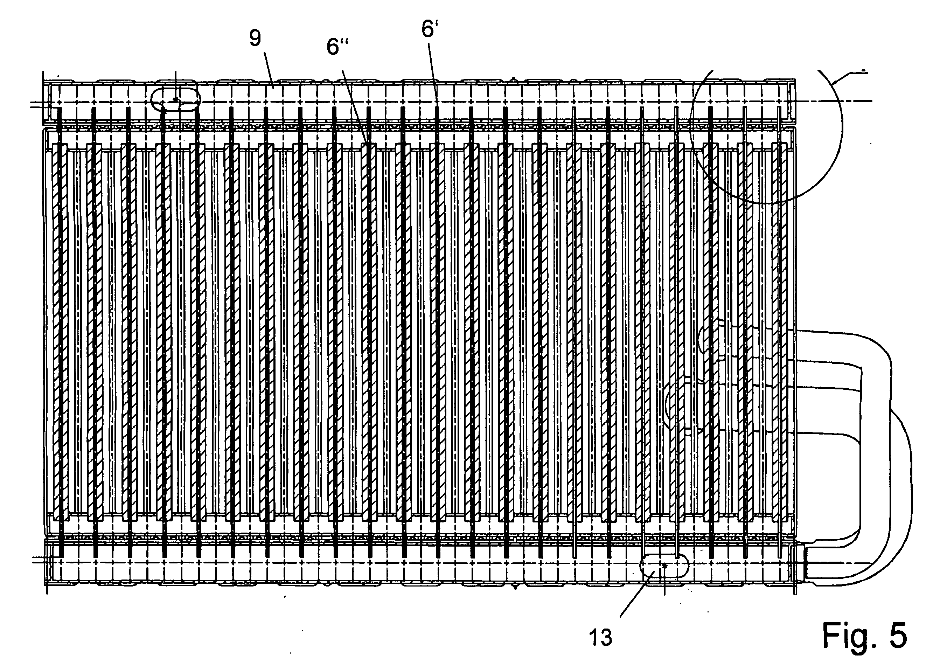

Jedes der Sammelrohre ist über je eine langlochartige Überströmöffnung (nicht dargestellt) mit einer an entsprechender Stelle angeordnete, langlochartige Überströmöffnung 13 der Sammelbehälter 9 verbunden (siehe Fig. 5).

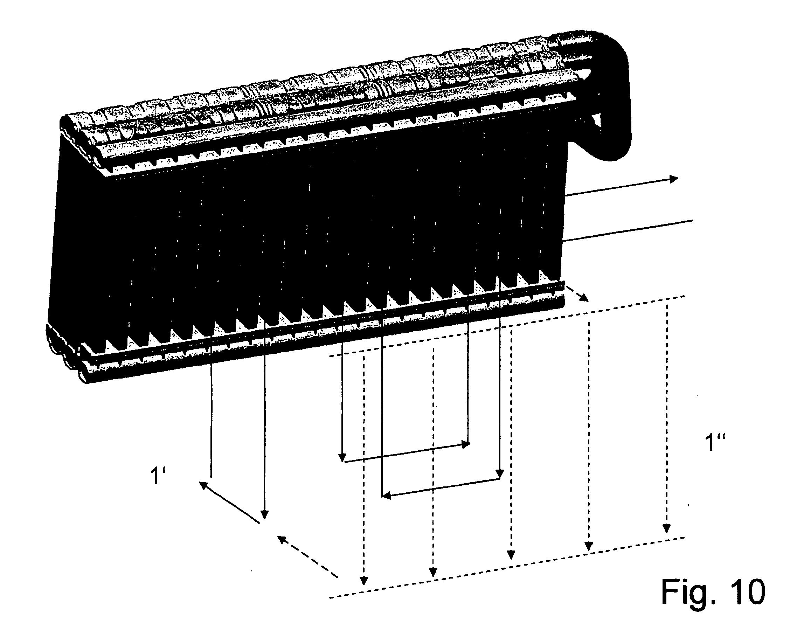

Der Verdampfer 1 wird in seinem herkömmlichen Bereich 1' derart durchströmt, dass der Kältemittelstrom in der Verdampferbreite zweimal umgelenkt wird, bevor er in der Tiefe entgegen der Luftströmungsrichtung umgelenkt wird. Im luftanströmseitigen Bereich wird er ebenfalls zweimal in der Breite umgelenkt. Es handelt sich somit um einen Verdampfer mit sechs Blöcken B1 bis B6, wobei je drei Blöcke in Breitenrichtung des Verdampfers 1 vorgesehen sind (d.h. in der zuerst durchströmten Reihe die Blöcke B1 bis B3 und in der zuletzt durchströmten Reihe die Blöcke B4 bis B6) und die einzelnen Blöcke B1 bis B6 der beiden Blockreihen im Kreuz-Gegenstrombetrieb durchströmt werden. Dieser Kältemittelströmungsverlauf ist in Fig. 10 durch Pfeile mit durchgehender Linie dargestellt.

Von dem Kältemittelstrom wird über die Überströmöffnung 13 im Sammelbehälter 9, kurz nach dem Eintritt vom Einspritzrohr 2 in den Sammelbehälter 9 im ersten Block B1 ein Teil des Kältemittels abgezweigt, welches über die Überströmöffnung in das Sammelrohr gelangt und über das Sammelrohr auf die Kältemittel-Kanäle 6' der Flachrohre 6 verteilt wird, welche vorliegend in einer Richtung durchströmt werden, d.h. es liegt über die gesamte Breite des Verdampfers 1 im Kältespeicherbereich 1" nur ein Speicherelementblock vor. Der abgezweigte Teil des Kältemittels wird über die zweite Überströmöffnung, die am zweiten Sammelrohr vorgesehen ist, und die entsprechende zweite Überströmöffnung 13 am anderen Sammelbehälter 9 wieder dem Haupt-Kältemittelstrom zugeführt, welches in diesem Bereich des Blocks B3 in der Tiefe zum Block B4 umgelenkt wird. Der Kältemittelströmungsverlauf des Teilstroms ist in Fig. 10 durch Pfeile mit gestrichelter Linie dargestellt.

An Stelle des zuvor beschriebenen Aufbaus können die Sammelbehälter auch auf andere Weise, insbesondere in Plattenbauweise, aufgebaut sein.

In den weiteren Figuren sind verschiedene Varianten der Kältemitteldurchleitung durch den Kältespeicherbereich 1" des Verdampfers 1 dargestellt, die sicherstellen sollen, dass das Kältespeichermedium in allen Kältespeichermedium-Kanälen 6" möglichst gleichmäßig seine Phasenumwandlung durchläuft. Hierfür ist sicherzustellen, dass der abgezweigte Teilstrom des Kältemittels möglichst gleichmäßig auf die Flachrohre 6 mit ihren Kältemittel-Kanälen 6' verteilt wird.

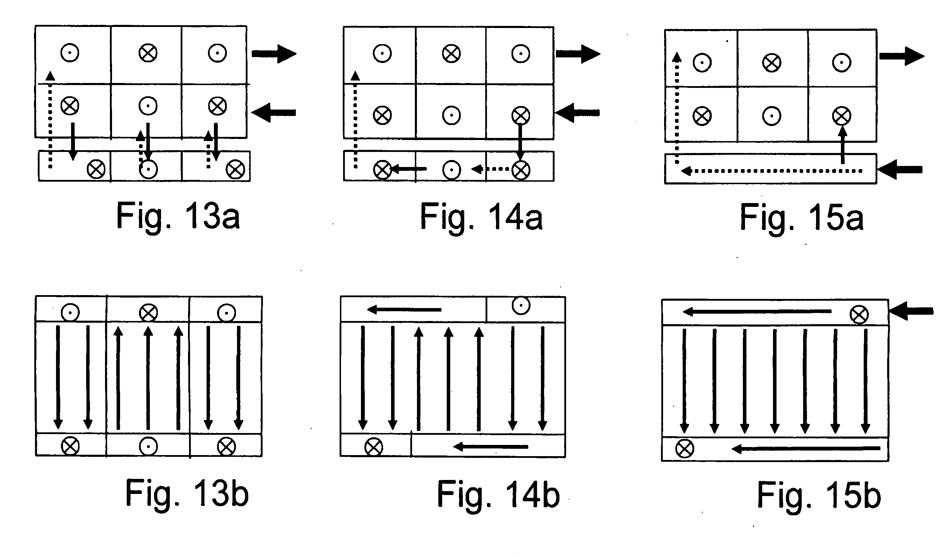

Die Figuren 13a und 13b zeigen eine Verschaltungsvariante mit 3-BlockVerschaltung im Speicherelement. Hierbei wird das Kältemittel aus jedem der ersten drei Blöcke B1 bis B3 des herkömmlichen Bereichs 1' des Verdampfers 1 in den zugehörigen Speicherelementblock verteilt (d.h. es gibt drei Speicherelementblöcke) und wieder zurückgeführt. Durch die verringerte Anzahl parallel geschalteter Flachrohre pro Speicherelementblock ergibt sich eine verbesserte Kältemittelverteilung als bei dem zuvor beschriebenen Ausführungsbeispiel.

Gemäß einer nicht in der Zeichnung dargestellten Abwandlung dieser Variante sind mehr als nur eine Aus- und Eintrittsöffnung je Block des herkömmlichem Bereichs des Verdampfers vorgesehen, so dass beispielsweise sechs Speicherelementblöcke vorgesehen sind.

Gemäß der zweiten, in den Figuren 14a und 14b dargestellten Variante erfolgt die Kältemittelströmungsführung im Speicherelement entsprechend der im Serienverdampfer (d.h. 2x Umlenkung in der Breite). Bei dieser Verschaltung wird bei einmaligem Überströmen aus dem herkömmlichen Bereich 1' des Verdampfers 1 nur ein Drittel der Flachrohre des Speicherelement parallel mit Kältemittel beaufschlagt. Andere Verschaltungen sind im Kältespeicherbereich 1" ebenfalls möglich, bspw. können fünf Speicherelementblöcke vorgesehen sein.

Figuren 15a und 15b zeigen einen direkten Kältemitteleintritt in den Kältemittelspeicherbereich 1" an Stelle in den herkömmlichen Bereich 1' des Verdampfers 1. Mit dieser Variante lässt sich eine bevorzugte Versorgung des Speicherelementblocks für den Fall gewährleisten, dass durch die Übertrittsöffnungen zu wenig KM aus dem herkömmlichen Bereich 1' des Verdampfers 1 abgezogen werden kann.

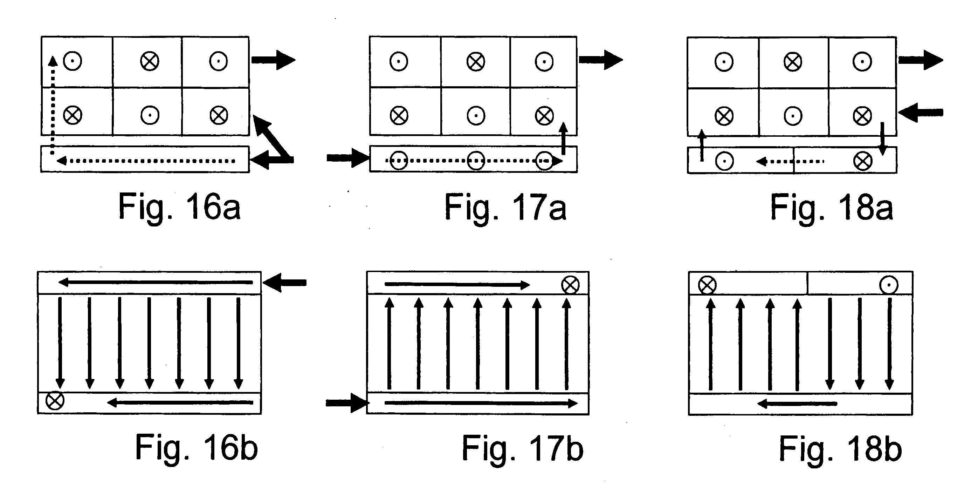

In den Figuren 16a und 16b ist als vierte Variante ein geteilter Kältemitteleintritt für den herkömmlichen Bereich 1' des Verdampfers 1 und den Kältespeicherbereich 1" vorgesehen, d.h. die Abzweigung des Teilstroms für den Kältespeicherbereich 1" erfolgt noch vor dem Eintritt des Kältemittels in den Verdampfer 1 im Bereich des Einspritzrohres. Hierbei lässt sich die Kältemittelverteilung auf die beiden Eintrittsöffnungen gegebenenfalls über den Einspritzrohrdurchmesser und den Druckverlust im herkömmlichen Bereich 1' des Verdampfers 1 und im Kältespeicherbereich 1' 'optimieren.

Figuren 17a und 17b zeigen eine Verschaltungsvariante mit einer Serienschaltung des Kältespeicherbereich 1" und, nachgeschaltet, des herkömmlichen Bereichs 1' des Verdampfers 1. Bei dieser Variante wird zunächst das Kältespeichermedium im Kältespeicherbereich 1" über den Kältemittelstrom gefroren (vorliegend erfolgt der Eintritt von unten), bevor das Kältemittel dann in der üblichen Stromführung den herkömmlichen Bereich 1' des Verdampfers 1 durchläuft. Da der gesamte Kältemittelstrom vollständig durch den Kältespeicherbereich 1" geleitet wird, friert diese Variante am schnellsten das Kältespeichermedium ein.

In den Figuren 18a und 18b ist eine weitere Verschaltungsvariante dargestellt, gemäß der wiederum ein Teilstrom im ersten Block B1 abgezweigt wird. Der Kältespeicherbereich 1" weist hierbei vorliegend zwei Blöcke auf, die in unterschiedlichen Richtungen durchströmt werden. Das Kältemittel aus dem Kältespeicherbereich 1" tritt hierbei am in den Sammelbehälter des dritten Blocks B3 ein und durchströmt denselben gemeinsam, d.h. der dritte Block B3 wird vom gesamten Kältemittel durchströmt, während die ersten beiden Blöcke B1 und B2 nur von einem (größeren) Kältemittelteilstrom durchströmt werden. Die beiden Blöcke des Kältespeicherbereichs 1" weisen gemäß der dargestellten Variante eine unterschiedliche Bereite auf, wobei der zuerst durchströmte Block schmaler als der danach durchströmte Block ist.

Die Verschaltungsvarianten ermöglichen eine verbesserte Dynamik des Be- und Entladevorgangs zu optimieren und das Austrittstemperaturprofil des Verdampfers bei Fahrzeugstopps zu homogenisieren.

Alle Varianten sind unabhängig vom Kältemittel (R134a, R744), der Sammlerkonstruktion (gebogener Sammler, Plattenbauweise) und Blockverschaltung des Serienverdampfers (bspw. 2- oder 4-Blockverschaltung).

## Patentansprüche

1. Wärmeübertrager, insbesondere Verdampfer (1), insbesondere für eine Kraftfahrzeug-Klimaanlage, mit einer Mehrzahl nebeneinanderliegend angeordneter, kältemittelführender Rohre und mit wenigstens einem Kältespeicher (4), in welchem ein Kältespeichermedium vorgesehen ist, **dadurch gekennzeichnet, dass** der Verdampfer (1) zwei parallel zueinander angeordnete und über die gesamte Breite verlaufende Bereiche (1' und 1") aufweist, wobei der erste Bereich (1') in seinem Aufbau einem herkömmlichen Verdampfer entspricht, der Kältespeicher (4) in einen eigenständigen zweiten Bereich (1") angeordnet ist, der von zumindest einem Teil des Kältemittelstroms durchströmbar ist, welcher auch zumindest ein Teil des ersten Bereichs (1') durchströmt, und der erste und der zweite Bereich durch mindestens eine Überströmöffnung (13) miteinander verbunden sind.

2. Wärmeübertrager nach Anspruch 1, **dadurch gekennzeichnet, dass** zwei Überströmöffnungen (13) vorgesehen sind.

3. Wärmeübertrager nach Anspruch 1 oder 2, **dadurch gekennzeichnet, dass** in mindestens einem Kältespeicherelement (5) mindestens ein kältemittelführendes Rohr angeordnet ist.

4. Wärmeübertrager nach einem der vorhergehenden Ansprüche, **dadurch gekennzeichnet, dass** das kältemittelführende und/oder das Kältespeichermedium enthaltende Rohr ein doppelwandiges Flachrohr (6) ist, wobei sich das Kältemittel im zentralen Bereich und das Kältespeichermedium im äußeren Bereich befindet.

5. Wärmeübertrager nach einem der vorhergehenden Ansprüche, **dadurch gekennzeichnet, dass** die kältemittelführenden Rohre des zweiten Bereichs (1") in einem Sammelbehälter (12) enden, der getrennt von und lediglich über eine oder mehrere Überströmöffnungen (13) mit einem Sammelbehälter (9) des ersten Bereichs (1') ausgebildet ist.

6. Wärmeübertrager nach einem der vorhergehenden Ansprüche, **dadurch gekennzeichnet, dass** die kältespeichermediumführenden Rohre beziehungsweise Kanäle in einem Kältespeichermedium-Sammelbehälter (10) enden, durch den die kältemittelführenden Rohre beziehungsweise Kanäle ragen, die in einem getrennten Sammelbehälter (12) enden.

7. Wärmeübertrager nach einem der vorhergehenden Ansprüche, **dadurch gekennzeichnet, dass** der erste Bereich (1') eine Anzahl von in unterschiedlicher Richtung vom Kältemittel durchströmbarer Blöcke (B1 bis B3) in Richtung seiner Breite benachbart dem zweiten Bereich aufweist, und der zweite Bereich (2") mindestens einen Block, insbesondere eine Anzahl von in unterschiedlicher Richtung vom Kältemittel durchströmbarer Blöcke, aufweist, und sich die Anzahl und/oder Breite der einzelnen Blöcke in Breitenrichtung des Verdampfers (1) im ersten Bereich (1') und im zweiten Bereich (1") unterscheidet.

8. Wärmeübertrager nach Anspruch 7, **dadurch gekennzeichnet, dass** der erste Bereich (1') direkt benachbart zum zweiten Bereich (1") zwei bis vier, insbesondere drei Blöcke (B1 bis B3), und der zweite Bereich (1") einen bis sechs Blöcke, insbesondere zwei bis vier Blöcke, aufweist.

9. Wärmeübertrager nach einem der vorhergehenden Ansprüchen, **dadurch gekennzeichnet, dass** die Phasenumwandlungstemperatur des Kältespeichermediums in einem Bereich von 0°C bis 30°C, vorzugsweise 1°C bis 20°C, insbesondere von 2°C bis 15°C, insbesondere bevorzugt von 4°C bis 12°C, liegt.

10. Wärmeübertrager nach einem der vorhergehenden Ansprüche, **dadurch gekennzeichnet, dass** im Kältespeicher (4) mindestens eine Einlage angeordnet ist.

11. Klimaanlage mit Kältespeicher (4), insbesondere für ein Kraftfahrzeug, mit einem Kältemittelkreislauf, **gekennzeichnet durch** einen Verdampfer (1) gemäß einem der Ansprüche 1 bis 10.

## Claims

1. Heat exchanger, in particular evaporator (1), in particular for a motor vehicle air conditioning system, with a plurality of mutually adjacent, refrigerant-carrying tubes and with at least one cold accumulator (4) in which a cold accumulator medium is provided, **characterised in that** the evaporator (1) comprises two regions (1' and 1") arranged parallel to one another and extending across the entire width, wherein the first region (1') corresponds in its structure to a conventional evaporator, wherein the cold accumulator (4) is disposed in an independent second region (1") through which at least a part of the refrigerant flow which also flows through at least a part of the first region (1') can flow, and wherein the first and second regions are connected to each other by at least one overflow opening (13).

2. Heat exchanger according to claim 1, **characterised in that** two overflow openings (13) are provided.

3. Heat exchanger according to claim 1 or 2, **characterised in that** at least one refrigerant-carrying tube is provided in at least one cold accumulator element (5).

4. Heat exchanger according to any of the preceding claims, **characterised in that** the tube carrying the refrigerant and/or containing the cold accumulator medium is a double-walled flat tube (6), the refrigerant being located in the central region and the cold accumulator medium being located in the outer region.

5. Heat exchanger according to any of the preceding claims, **characterised in that** the refrigerant-carrying tubes of the second region (1") terminate in a reservoir (12) which is separate from a reservoir (9) of the first region (1') and only connected thereto by one or more overflow openings (13).

6. Heat exchanger according to any of the preceding claims, **characterised in that** the tubes or passages carrying the cold accumulator medium terminate in a cold accumulator medium reservoir (10) through which the refrigerant-carrying tubes or passages which end in a separate reservoir (12) project.

7. Heat exchanger according to any of the preceding claims, **characterised in that** the first region (1') comprises, in the direction of its width adjacent to the second region, a number of blocks (B1 to B3) through which the refrigerant can flow in different directions, **in that** the second region (1") comprises at least one block, in particular a number of blocks, through which the refrigerant can flow in different directions, and **in that** the number and/or width of the individual blocks in the direction of the width of the evaporator (1) differ(s) in the first region (1') and in the second region (1 ").

8. Heat exchanger according to claim 7, **characterised in that** the first region (1') comprises, directly adjacent to the second region (1"), two to four, in particular three, blocks (B1 to B3), and **in that** the second region (1") comprises one to six, in particular two to four, blocks.

9. Heat exchanger according to any of the preceding claims, **characterised in that** the phase change temperature of the cold accumulator medium lies within a range from 0°C to 30°C, preferably from 1°C to 20°C, in particular from 2°C to 15°C, in particular preferably from 4°C to 12°C.

10. Heat exchanger according to any of the preceding claims, **characterised in that** at least one inlay is disposed in the cold accumulator (4).

11. Air conditioning system with a cold accumulator (4), in particular for a motor vehicle, having a refrigerant circuit **characterised by** an evaporator (1) according to any of claims 1 to 10.

## Revendications

1. Echangeur de chaleur, en particulier évaporateur (1), en particulier pour un système de climatisation d'un véhicule automobile, comprenant une pluralité de tubes fournissant du fluide frigorigène, disposés les uns à côté des autres, et comprenant au moins un accumulateur de froid (4) dans lequel il est prévu un milieu d'accumulateur de froid,
**caractérisé en ce que** l'évaporateur (1) présente deux zones (1' et 1") disposées de façon parallèle l'une à l'autre et s'étendant sur toute la largeur, où la première zone (1') correspond, dans sa structure, à un évaporateur de type courant, où l'accumulateur de froid (4) est disposé dans une deuxième zone indépendante (1") qui peut être traversée par au moins une partie du flux de fluide frigorigène qui traverse également au moins une partie de la première zone (1'), et la première zone et la deuxième zone sont reliées l'une à l'autre par au moins une ouverture de trop-plein (13).

2. Echangeur de chaleur selon la revendication 1, **caractérisé en ce qu'**il est prévu deux ouvertures de trop-plein (13).

3. Echangeur de chaleur selon la revendication 1 ou 2, **caractérisé en ce qu'**au moins un tube fournissant du fluide frigorigène est disposé dans au moins un élément (5) de l'accumulateur de froid.

4. Echangeur de chaleur selon l'une quelconque des revendications précédentes, **caractérisé en ce que** le tube fournissant le fluide frigorigène et / ou contenant le milieu d'accumulateur de froid est un tube plat (6) à double paroi, où le fluide frigorigène se trouve dans la zone centrale et le milieu de l'accumulateur de froid dans la zone extérieure.

5. Echangeur de chaleur selon l'une quelconque des revendications précédentes, **caractérisé en ce que** les tubes de la deuxième zone (1"), fournissant le fluide frigorigène, se terminent dans un bac collecteur (12) qui est configuré en étant séparé d'un bac collecteur (9) de la première zone (1') et raccordé à celui-ci seulement par une ou plusieurs ouvertures de trop-plein (13).

6. Echangeur de chaleur selon l'une quelconque des revendications précédentes, **caractérisé en ce que** les tubes ou conduits fournissant le milieu d'accumulateur de froid se terminent dans un bac collecteur (10) du milieu d'accumulateur de froid, bac collecteur duquel dépassent les tubes ou conduits fournissant le fluide frigorigène, lesquels tubes ou conduits se terminent dans un bac collecteur distinct (12).

7. Echangeur de chaleur selon l'une quelconque des revendications précédentes, **caractérisé en ce que** la première zone (1') présente, dans le sens de sa largeur, de façon adjacente à la deuxième zone, un certain nombre de blocs (B1 à B3) pouvant être traversés par le fluide frigorigène, dans une direction différente, et la deuxième zone (2") présente au moins un bloc, en particulier un certain nombre de blocs pouvant être traversés par le fluide frigorigène dans une direction différente, et le nombre et / ou la largeur des différents blocs se différencie dans la première zone (1') et dans la deuxième zone (1"), dans le sens de la largeur de l'évaporateur (1).

8. Echangeur de chaleur selon la revendication 7, **caractérisé en ce que** la première zone (1'), de façon directement adjacente à la deuxième zone (1"), présente deux à quatre, en particulier trois blocs (B1 à B3), la deuxième zone (1") présentant un à six blocs, en particulier deux à quatre blocs.

9. Echangeur de chaleur selon l'une quelconque des revendications précédentes, **caractérisé en ce que** la température de changement de phase du milieu d'accumulateur de froid se trouve dans une plage comprise entre 0°C et 30°C, de préférence entre 1°C et 20°C, en particulier entre 2°C et 15°C, en particulier de préférence entre 4°C et 12°C.

10. Echangeur de chaleur selon l'une quelconque des revendications précédentes, **caractérisé en ce qu'**au moins une couche intermédiaire est disposée dans l'accumulateur de froid (4).

11. Système de climatisation comprenant un accumulateur de froid (4), en particulier pour un véhicule automobile, comprenant un circuit de fluide frigorigène, **caractérisé par** un évaporateur (1) selon l'une quelconque des revendications 1 à 10.
